# EUROPEAN PATENT SPECIFICATION

(11) **EP 4 176 365 B1**
(45) Date of publication and mention of the grant of the patent: **06.08.2025**
(21) Application number: 21832217.0
(22) Date of filing: 05.07.2021
(51) Int. Cl.: G06F 21/62, G06F 11/34, H04M 1/72463, G06F 21/84, G06Q 10/1091, G06Q 50/20

(54) **METHOD FOR CONTROLLING AMOUNT OF SCREEN TIME OF AN INDIVIDUAL**
VERFAHREN ZUR STEUERUNG DER BILDSCHIRMZEITMENGE EINER PERSON
PROCÉDÉ DE CONTRÔLE DU TEMPS PASSÉ DEVANT UN ÉCRAN D'UN INDIVIDU

(30) Priority: 03.07.2020 AU 2020902289
(43) Date of publication of application: 10.05.2023
(73) Proprietor: Carter, Ashley, Kogarah NSW 2216 (AU)
(72) Inventor: Carter, Ashley, Kogarah NSW 2216 (AU)
(74) Representative: Fulton, David James
(86) International application number: PCT/AU2021/050716
(87) International publication number: WO 2022/000047

(56) References cited:
- WO-A1-2008/094941
- WO-A1-2019/200350
- KR-A- 20190 114 566
- US-A1- 2019 026 482
- US-A1- 2019 220 290
- GUZMAN TARA: "Your child can earn screen time by doing math problems", KIDSACTIVITIES.COM, 21 April 2020 (2020-04-21), pages 1 - 8, XP055896454, Retrieved from the Internet <URL:https://kidsactivitiesblog.com/138319/your-child-can-cam-screen-time-by-doing-math-problems> [retrieved on 20220301]
- WELCH C.: "How to use Apple's new Screen Time and App Limits features in iOS 12 ", THE VERGE, 17 September 2018 (2018-09-17), pages 1 - 5, XP055896462, Retrieved from the Internet <URL:https://www.theverge.com/2018/9/17/17870126/ios-12-screen-time-app-limits-downtime-features-how-to-use> [retrieved on 20220301]

## Description

### RELATED APPLICATIONS

The present application claims priority from earlier filed Australian patent publication no. 2021298398 A1 filed on 3 July 2020.

### FIELD OF INVENTION

The present invention relates generally to a method for controlling the amount of screen time activity undertaken by an individual, and in particular, to a method that limits unproductive screen time activity undertaken by an individual.

### BACKGROUND OF THE INVENTION

An increase in the availability of information technology has drastically changed the manner in which individuals of all ages conduct their lives. In many aspects, information technology, such as computers, smart phones and the like, have made life easier by providing greater access to a variety of information and services that were previously difficult and timely to access. This has resulted in an increase in prosperity for a large proportion of the population, making it possible to perform tasks remotely and more efficiently than ever before.

The increased availability of technology has also changed the way people entertain themselves and communicate. For many, traditional leisure pursuits and pastimes involving the outdoors and exercise have been discarded and replaced with on-line entertainment through computers and smart phones. Such on-line entertainment may be in the form of watching movies, interacting with social media platforms and playing electronic games, which can be simply conducted via a smart phone or personal computing device.

Unfortunately, for children and young adults, excessive on-line activity can be problematic to the individual's social growth and consumes time that could otherwise be used for traditional learning activities, exercise and other pastimes. Thus, many parents and carers of children and young adults seek to regulate the amount of screen time they are exposed to, to ensure that there is available time for the individuals to perform other tasks to round-out their education and life experiences.

Thus, there is a need to provide a system and method that monitors an individual's screen time exposure and ensures that the individual is exposed to a variety of different positive experiences whilst on-line.

Examples of systems and methods known in the art include International Patent Publication Number WO 2008/094941 A1, US Patent Publication Number US 2019/0220290 A1, Korean Patent Publication Number KR 20190114566 A, and US Patent Publication Number US 2019/0026482 A1.

The above references to and descriptions of prior proposals or products are not intended to be, and are not to be construed as, statements or admissions of common general knowledge in the art. In particular, the above prior art discussion does not relate to what is commonly or well known by the person skilled in the art, but assists in the understanding of the inventive step of the present invention of which the identification of pertinent prior art proposals is but one part.

### STATEMENT OF INVENTION

The invention according to one or more aspects is as defined in claim 1. Some optional and/or preferred features of the invention are defined in the dependent claims.

Accordingly, in one aspect of the invention there is provided a method of controlling access by a user to an electronic device, the electronic device being controlled by an administrator that has identified one or more software applications on the electronic device to which access by the user is to be limited and an allowable time period for the user to access the identified one or more software applications, the method comprising:
monitoring a use time for the user accessing the identified one or more software applications;
determining when the use time of the user accessing the identified one or more software applications exceeds the allowable time period for accessing the identified one or more software applications;
alerting the user that their use time for accessing the identified one or more software applications is to exceed the allowable use time for that user to access the identified one or more software applications and suspending access by the user to the identified one or more software applications on the electronic device;
enabling the user to request an extension to the allowable time period to access the identified one or more software applications;
providing the user with a task selected by the administrator in accordance with the educational requirements of the user, for the user to perform in response to the request for an extension to the allowable time period;
assessing the performance of the user in said task; and
upon successful completion of said task, extending the allowable time period for the user to access the identified one or more software applications.

The step of identifying one or more software applications accessible on the electronic device may comprise interrogating the operating system of the electronic device to provide a list of all applications accessible on the electronic device.

The user, or an administrator supervising the user, may identify the one or more software applications that access by the user is to be limited to, by selecting the one or more software applications from the list of all applications accessible on the electronic device.

The allowable time period for a user to access the identified applications may be set by an administrator supervising the user for each identified application. The allowable time period may be set in discrete time intervals as pre-determined or set by the user or administrator.

The use time of the user accessing the identified one or more software applications may be monitored by a clock that records accumulative access time of the user to the identified one or more software applications.

The recorded accumulative access time of the user may be compared against the allowable time period for accessing the identified one or more software applications.

The extension to the allowable time period for the user to access the identified one or more software applications may be predetermined by the user or an administrator on behalf of the user.

The task assigned to the user in response to the request for an extension to the allowable time period may comprise a quiz or test to be performed by the user.

The performance of the user in the task may be assessed based on a level of success of the user in completing the task to a predetermined level of accuracy. The predetermined level of accuracy may be set by an administrator or the user.

Accordingly, in another aspect of the invention there is provided a system for controlling access time of a user to an electronic device comprising:
an electronic device accessible by the user and having an operating system for operating one or more software applications in a foreground of the device for use by the user; and
a dedicated software application configured to operate substantially in a background of the operating system of the electronic device, the dedicated software application configured to monitor access time of the user to a predetermined one or more of the software applications operated by the operating system of the electronic device in the foreground of the device and to suspend access of the user to the predetermined one or more of the software applications if the monitored access time exceeds a predetermined allowable access time;
wherein upon the monitored access time exceeding the predetermined access time, the dedicated software application operates in the foreground of the operating system of the electronic device to provide the user with an option to extend the predetermined allowable access time.

### BRIEF DESCRIPTION OF THE DRAWINGS

The invention may be better understood from the following non-limiting description of preferred embodiments, in which:
Fig. 1 is a functional diagram of an exemplary system for controlling access to an electronic device according to the present invention;
Fig. 2 is flow chart depicting a method of setting-up the system of Fig. 1 on a smart phone;
Fig. 3 is a flow chart depicting the method of performing the controlled access system according to an embodiment of the present invention; and
Figs 4 - 15 are screen shots depicting the steps of the invention as shown in Figs 2 and 3.

### DETAILED DESCRIPTION OF THE DRAWINGS

Preferred features of the present invention will now be described with particular reference to the accompanying drawings. However, it is to be understood that the features illustrated in and described with reference to the drawings are not to be construed as limiting on the scope of the appended claims.

In the following detailed description, although numerous features may be designated as optional, it is nevertheless acknowledged that all features defined by appended claim 1 are not to be read as optional. The present invention will be described below in relation to a system and method for monitoring and controlling screen time access of a user on a smart phone or similar electronic device. It will be appreciated that the system and method of the present invention could be employed for use with a variety of electronic devices, such as gaming consoles, computers, laptops, tablets and the like. The system and method of the present invention will be described in relation to a software application that is stored on the device being monitored; however, it will be appreciated that the system and method of the present invention could be accessed via a remote host server or on the cloud, as will be appreciated by those skilled in the art.

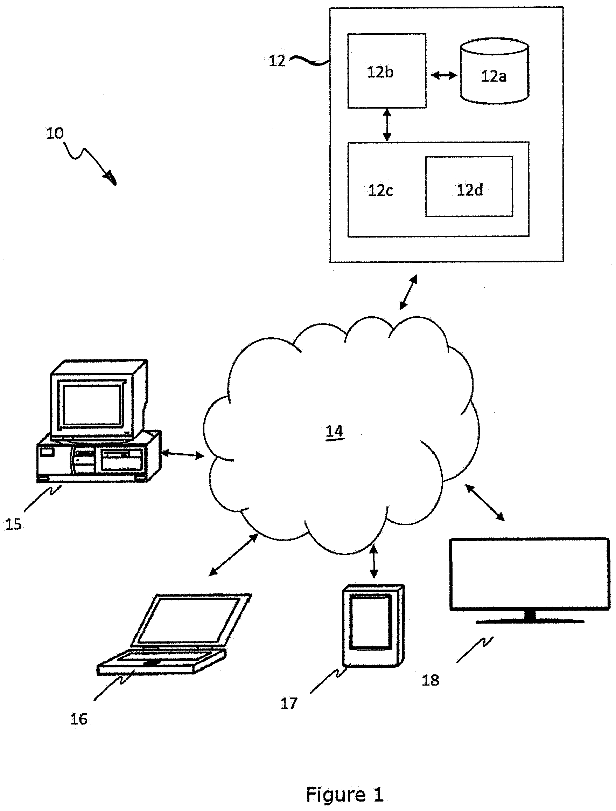

Fig. 1 illustrates a functional diagram of an exemplary system 10 within which the present invention may be embodied. The system 10 comprises a host service 12 which is configured as described in greater detail below, in accordance with a preferred embodiment of the present invention. The host service 12 is connected to a plurality of remote user services 15, 16, 17 and 18 over a network 14, such as the internet.

The host service 12 is configured to facilitate selective engagement between the host service 12 and the remote services 15, 16, 17, 18 who are customers of the host service 12. The remote services 15, 16, 17, 18 comprise electronic devices that may be used by users of the present invention.

The exemplary host service 12 comprises one or more host servers that are connected to the network 14, and therefore communicate via that network 14 through a wired or wireless communication system, in a conventional manner as will be appreciated by those skilled in the art. The host servers are configured to store a variety of information collected from the remote services 15, 16, 17, 18 and facilitates the transmission of information between the host service 12 and the remote services 15, 16, 17, 18.

The host servers are also able to house multiple databases 12a necessary for the operation of methods and systems of the present invention. The host servers may comprise any of a number of servers known to those skilled in the art and are intended to be operably connected to the network 14 so as to operably link to a computer system associated with the remote services 15, 16, 17, 18. The host servers can be operated and supplied by a third party server providing service, or alternatively can be hosted locally.

The host servers typically include a central processing unit (CPU) 12b that includes one or more microprocessors and memory 12c operably connected to the CPU 12b.

The memory can include any combination of random access memory (RAM), a storage medium such as at least one magnetic hard disk drive and the like. The storage medium is used for long term storage of program components as well as storage of data relating to the customers and their transactions. The central processing unit 12b which is associated with random access memory 12c, is used for containing program instructions and transient data related to the operation of services provided by the host service 12. In particular, the memory 12c contains a body of instructions 12d for implementing at least part of a method for monitoring screen use of each of the remote services 15, 16, 17, 18. The instructions 12d also include instructions for providing a web-based user interface that enables users to remotely access the host service 12 from any client computer executing conventional web browser software.

In a preferred embodiment, the computing network 14 is the internet or a dedicated mobile or cellular network in combination with the internet, such as a GSM, CDMA, UTMS, WCDMA or LTE networks and the like. Other types of networks such as an intranet, an extranet, a virtual private network (VPN) and non-TCP/IP based networks are also envisaged.

The users of the remote services 15, 16, 17, 18 may include individual users having email or similar electronic communication accounts. Each user of the remote services 15, 16, 17, 18 are registered with the host service 12 via a formal registration process that captures the relevant information required by the present invention, which will be discussed in more detail below.

Each user of the remote services 15, 16, 17, 18 is able to receive communication from the host service 12 via the network 14 and is able to communicate to the host service 12 via the network 14.

The host service 12 may be provided with a dedicated software application or "app" which is operated by the CPU 12b stored in the host servers. A copy of the software application can be obtained by a user of a remote service by downloading the software application directly to their remote service 15, 16, 17, 18 from the host service, or through a commercial software application retail site. Once installed, the software application of the host service 12 provides an interface that enables the host service 12 to facilitate communication of information to a user remote service 15, 16, 17, 18.

In a preferred embodiment of the present invention, an administrator of the user remote service 15, 16, 17, 18, typically a parent or guardian of a child or young adult user of the user remote service 15, 16, 17, 18, will register with the host service 12. Upon registration a software application will be made available to the administrator of the service for installation and operation on the device associated with the user remote service 15, 16, 17, 18.

The device, such as a smart phone, will be typically installed and set-up by the administrator in accordance with their desired settings. Once installed on the user remote service 15, 16, 17 or 18, the installed software application will typically run in a background mode as will be described in more detail below.

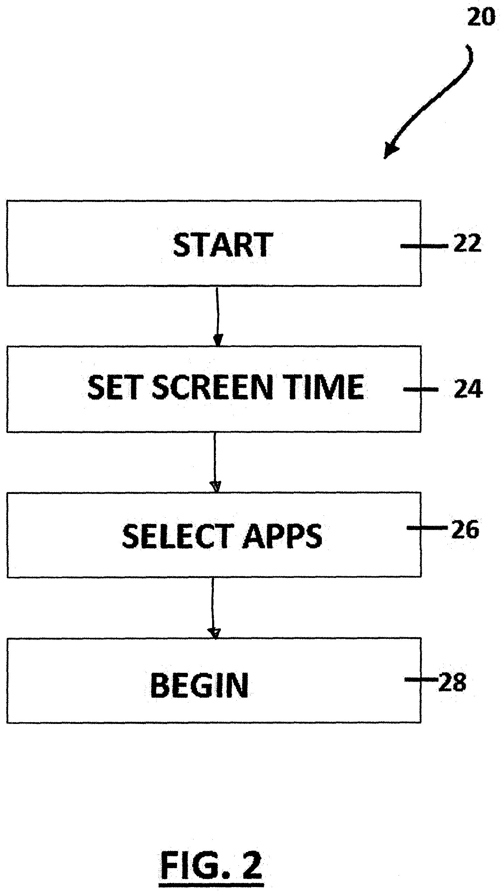

Fig. 2 depicts an embodiment of a method 20 that describes a manner in which an administrator is able to set-up the system of the present invention on a smart phone or similar device.

As previously discussed, prior to undertaking the method 20 the administrator, typically a parent or guardian of the intended user of the device, will download the software application into the operating system of the smart phone, from the host service 12 or similar software application provider. This will provide a means by which the activity performed on the device by the user can be monitored and controlled in accordance with the present invention.

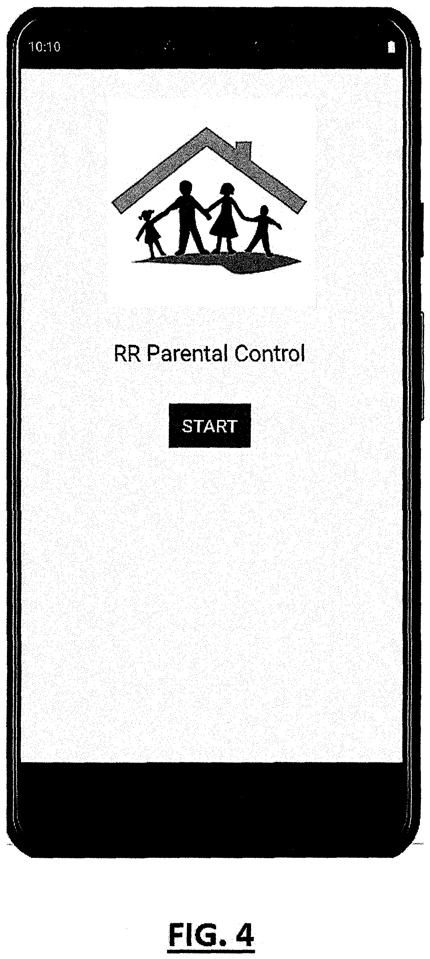

In a first step 22, as part of the registration process, the administrator will provide the age of the intended user of the device that is to be monitored to enable the host service 12 to determine the appropriate operating parameters and activities suitable for the intended user to complete during use. The administrator will then activate the application on the device where it will initiate a set-up mode, as depicted in the screen shot of Fig. 4.

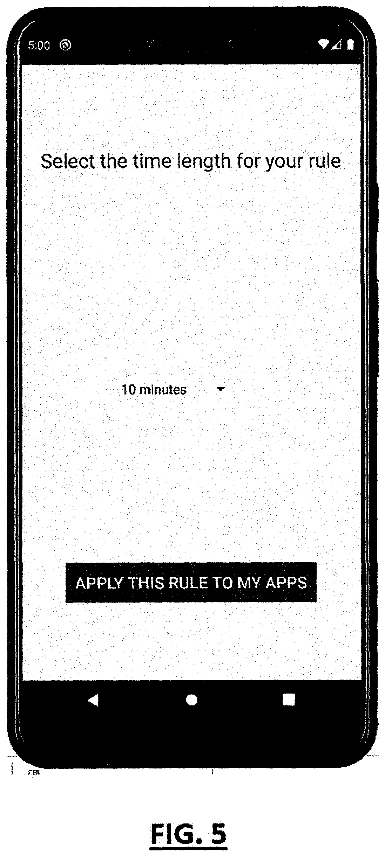

Once activated, the administrator will be directed to the screen as depicted in Fig. 5, where they will be required to set the desired amount of initial uninterrupted 'screen time' or application usage allowed for the intended user, in step 24. The administrator may select any variety of time lengths in, for example, 10 minute increments in accordance with their personal preferences. Once the 'screen time' or application usage limit is selected, the administrator will then save this setting as a rule to be applied by the software application.

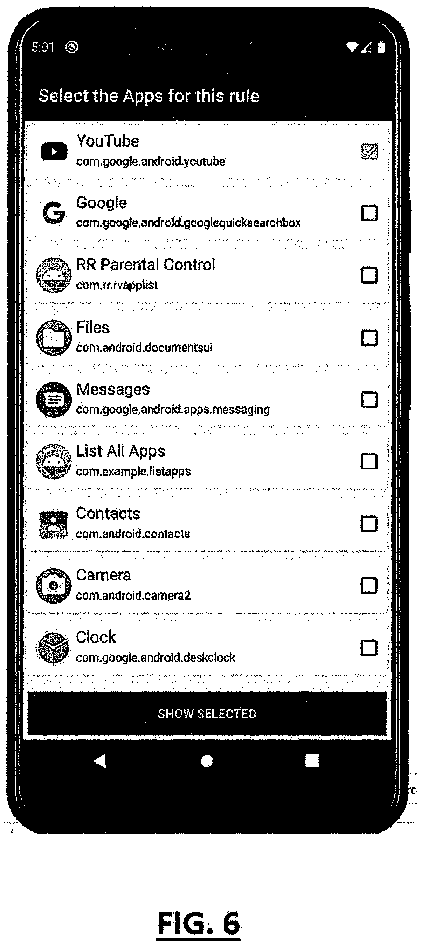

In step 26, the administrator is able to select the specific software applications present on the device to which the access time is to be limited by the rule selected in step 24. As part of the set-up process, the software application of the present invention will interrogate the operating system of the device to provide a list of all software applications present in the device that may be accessed by the user of the device. This list will be provided to the administration in the manner as depicted in the screen shot of Fig. 6. The administrator is then able to select each software application that they wish to limit access to, by activating the appropriate box associated with that software application. Once selected, the software application will then save the list as part of the set-up procedure.

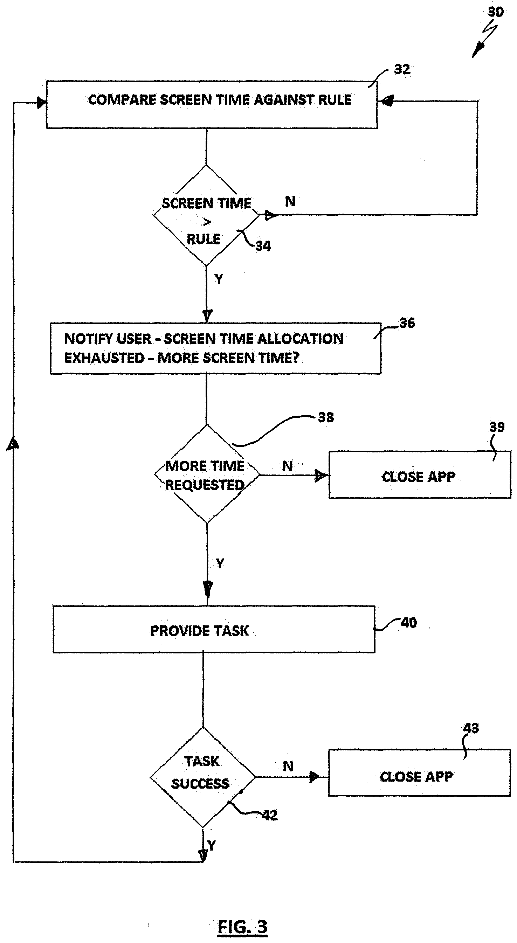

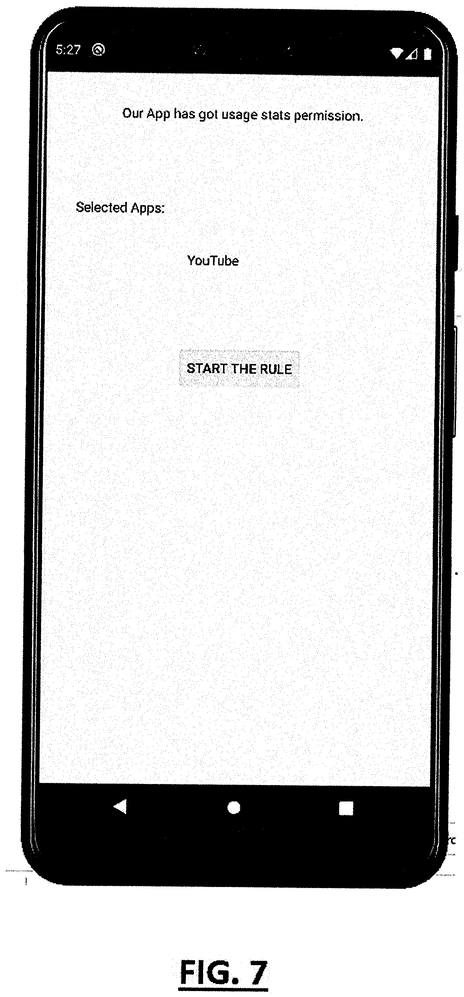

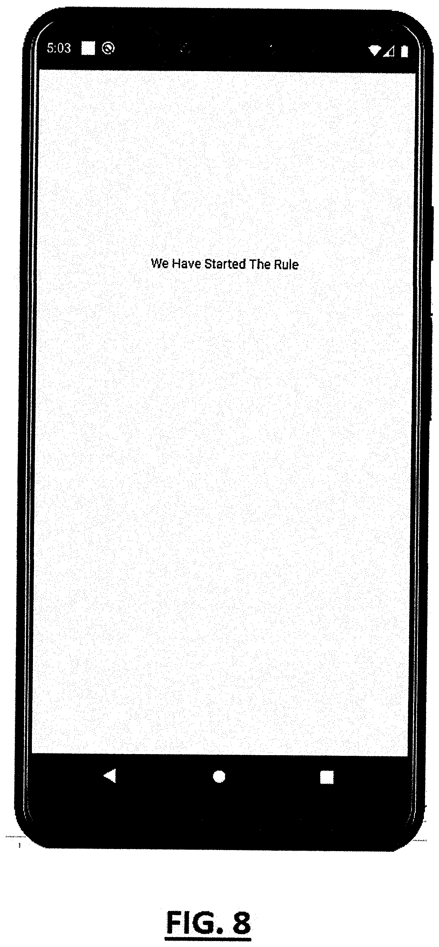

In step 28, the administrator will then be directed to the screen page as shown in Fig. 7 to enable the process to begin. Once the administrator starts the process, they will be directed to the screen page depicted in Fig. 8, where the software application confirms that it has been activated at which stage the administrator can close the page such that it is removed from the screen. The software application of the present invention will then operate as a background service that receives notifications to check changes to the foreground applications running on the device. If the present system detects that a foreground application running on the device is one of the applications that has been selected by the administrator to have limited access under the rule of the present system, the software application of the present invention will then initiate a timer/clock that measure the duration of usage/access of the user to that software application in accordance with the method 30 of Fig. 3.

In step 32 of method 30, the software application will compare the cumulative time associated with the operation of the selected foreground application that is being measured by the system clock, against the screen time/access time rule limit set by the administrator.

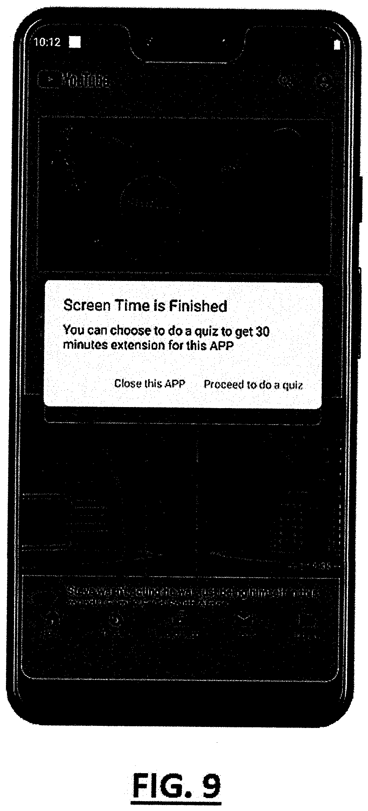

If, in step 34, the operating time of the foreground application is determined to be below the time limit set by the administrator under the rule, the user will be allowed to continue to access the foreground application unimpeded. However, if the operating time of the foreground application is determined to be above the rule limit, the foreground application will become suspended by the software application of the and present system and the software application will issue an alert message to be displayed on the screen in step 36. A screen shot depicting an example of the alert message to be displayed to the user is shown in Fig. 9.

In step 36, as well as alerting the user that they have exhausted their allocated screen time/access time for that that device, the message will also provide the user with an option to close the foreground application they have been using, or seek to extend their access time.

In step 38, should the user decide to close the foreground application, the foreground application will be closed in step 39 and the system will continue to operate as a background service and monitor the user's usage. The user will then be able to still use the device, such as make a call or the like, but is prevented from accessing any of the identified software applications. Should the user attempt to access another of these software applications that has been selected by the administrator, they will be prevented from running the application and will be reissued with the warning message of Fig. 9.

However, if the user decides to seek to extend their screen/access time in step 38, the software application of the present system will then redirect the user to a task page where they will be requested to perform a task in step 40 to qualify for access to extra screen time.

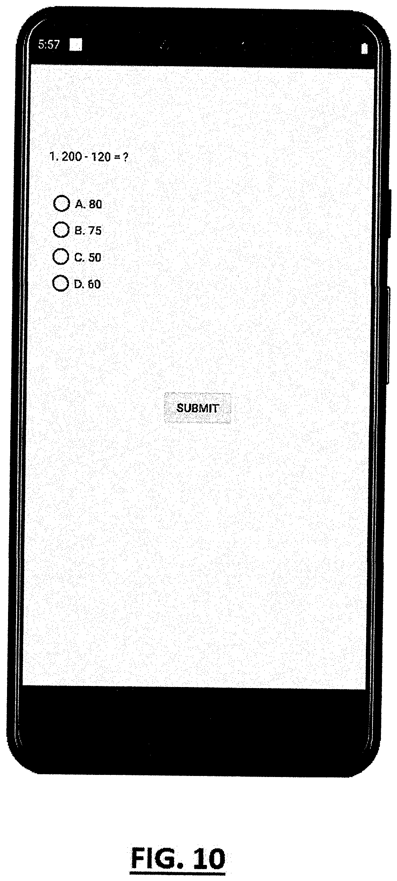

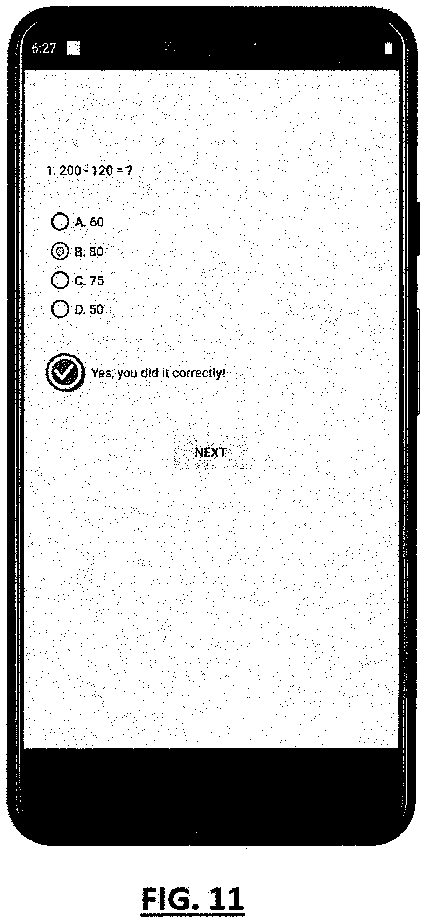

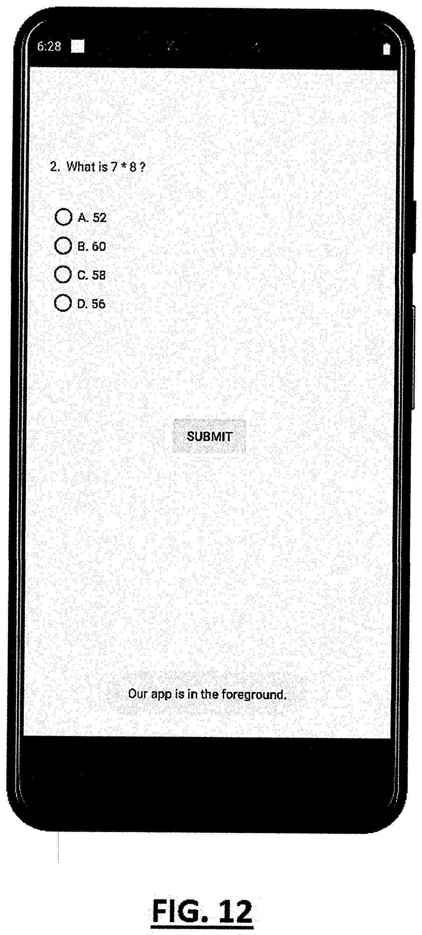

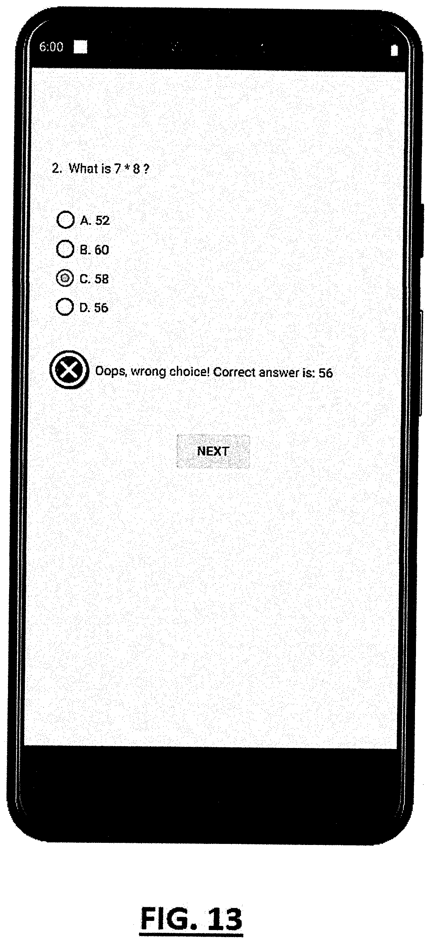

The type of tasks presented to the user in step 40 will typically be predetermined by the administrator during the set-up procedure. Such tasks typically involve requiring the user to perform an educational function and to test the user as to the success of the task. In one embodiment, as depicted in Figs.10 - 13, the task involves presenting the user with a series of mathematical problems that are appropriate to the age of the user to test the user's mathematical problem solving ability. The mathematical problems may have a time limit for providing an answer and the user will be given immediate feedback as to their success or failure in answering the problem and where appropriate, provided with the correct answer, as is depicted in the screenshot of Fig. 13.

It will be appreciated that the type of task provided to the user may vary. In other applications, the task could include a comprehension test where the user is provided with a text to read and is then required to answer questions based on their understanding of the text. Such tasks may be provided by educational institutions as being relevant to the age of the user and may be aligned with a school curriculum or similar institution, to ensure that the task is relevant to the user's educational needs. It will be appreciated that the type of task undertaken in step 40 may vary depending upon the age, sex, demographics and ability of the individual user. In other applications, the task may comprise an advertisement, survey or questionnaire, where the user is required to answer questions relevant to a specific purpose.

In a preferred embodiment the host server may store a variety of different tests based on education curriculum such that the tasks represent school based competencies that are considered standard for the age of the child. It will also be appreciated that the host service can store a variety of tests that may be set by individual schools or learning systems which can be selected by the administrator upon registration with the host server. This can enable the administrator to select tasks which may enhance the user's existing learning experience, such as a quiz on a book that is being studied by the user in class, or specific mathematical problems which the user may be experiencing. Irrespective of the task that is presented to the user in step 40, the purpose of the step is to ensure that the user is performing a task that has an educational component to the ongoing wellbeing of the user.

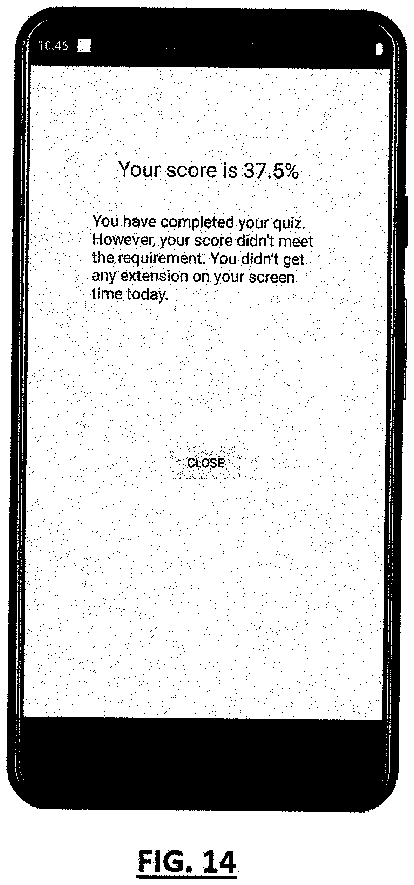

In step 42, the user is assessed on the basis of the task set in step 40. If the user has not been successful in performing the task, they will be informed in step 43 that their request for additional screen/access time was unsuccessful. The suspended foreground application will then be closed. An example of such a message is shown in the screen shot of Fig. 14.

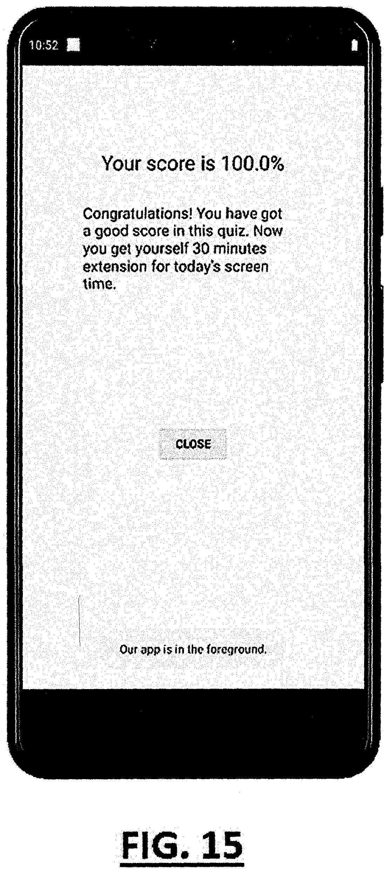

Alternatively, if in step 42 the user has been determined to have been successful in performing the task, they will be informed by a message as depicted in Fig. 15 and the extension of their screen time will be allowed. The suspended foreground application will then be resumed and the user will continue to use the foreground application and the system will continue to monitor the screen/access time in accordance with step 32.

It will be appreciated that the present application will make the determination in step 42 as to whether the user was successful or not in the task. The score that determines whether the task was completed successfully or not, can be set by the administrator, other third party or user, together with the amount of extra screen time allowed and the number of extensions possible for each user. The present system application may assess each task by comparing the results against a set of results stored with the host service. The software application of the present system will provide updates to the administrators as to when new tasks are available such that the administrators can review the tasks for suitability to the users.

In situations where the system has deemed that the user has been unsuccessful in completing the task, the user may be given additional opportunities to redo the task or another perform another task to obtain an extension of their screen time. In some instances, a limited number of attempts may be provided before the user is locked out of the device.

It will be appreciated that the system and method of the present invention enables parents and guardians to set up rules to control the amount of time that children (or anyone) spends on selected Apps in a mobile or other computing device (ipad, xbox, playstation, computers, smart televisions, etc). The system and method can be controlled by the administrator such that when the screen time permitted expires, the users are asked questions or to read and answer questions, or asked to complete surveys to extend screen time. Failure to correctly perform such tasks will result in the user losing access to those Apps until a future pre-determined day/time, which is controlled by the administrator/parent. It will be appreciated that such a system and method ensures that even when the device is being used solely by the user for leisure pursuits, overuse of the device is limited without the user having to demonstrate some ongoing educational and useful activities. With such a system, parents/guardians are able to be satisfied that any extended use of the electronic device has involved completion of at least some educational function outside merely game play or social media usage, and access to additional screen/usage time is seen as a reward for performing such tasks.

Throughout the specification and claims the word "comprise" and its derivatives are intended to have an inclusive rather than exclusive meaning unless the contrary is expressly stated or the context requires otherwise. That is, the word "comprise" and its derivatives will be taken to indicate the inclusion of not only the listed components, steps or features that it directly references, but also other components, steps or features not specifically listed, unless the contrary is expressly stated or the context requires otherwise.

It will be appreciated by those skilled in the art that many modifications and variations may be made to the methods of the invention described herein without departing from the scope of the appended claims.

## Claims

1. A method (30) of controlling access by a user to an electronic device (15, 16, 17, 18), the electronic device (15, 16, 17, 18) being controlled by an administrator that has identified one or more software applications on the electronic device (15, 16, 17, 18) to which access by the user is to be limited and an allowable time period for the user to access the identified one or more software applications, the method comprising:
monitoring a use time for the user accessing the identified one or more software applications (32);
determining when the use time of the user accessing the identified one or more software applications exceeds the allowable time period for accessing the identified one or more software applications (34);
alerting the user that their use time for accessing the identified one or more software applications is to exceed the allowable use time for that user to access the identified one or more software applications and suspending access by the user to the identified one or more software applications on the electronic device (36); and
enabling the user to request an extension to the allowable time period to access the identified one or more software applications (38);
providing the user with a task selected by the administrator in accordance with the educational requirements of the user, for the user to perform in response to the request for an extension to the allowable time period (40);
assessing the performance of the user in said task (42); and
upon successful completion of said task, extending the allowable time period for the user to access the identified one or more software applications.

2. A method (30) according to claim 1, wherein the allowable time period for a user to access the identified applications is set by an administrator supervising the user for each identified application.

3. A method (30) according to claim 2, wherein the allowable time period is set in discrete time intervals as pre-determined or set by the user or administrator.

4. A method (30) according to claim 1, wherein the use time of the user accessing the identified one or more software applications is monitored by a clock that records accumulative access time of the user to the identified one or more software applications.

5. A method (30) according to claim 4, wherein the recorded accumulative access time of the user is compared against the allowable time period for accessing the identified one or more software applications.

6. A method (30) according to claim 1, wherein the extension to the allowable time period for the user to access the identified one or more software applications is predetermined by the user or an administrator on behalf of the user.

7. A method (30) according to claim 6, wherein the task assigned to the user in response to the request for an extension to the allowable time period comprises a quiz or test to be performed by the user.

8. A method (30) according to claim 1, wherein the performance of the user in the task is assessed on a level of success of the user in completing the task to a predetermined level of accuracy.

9. A method (30) according to claim 8, wherein the predetermined level of accuracy is set by an administrator or the user.

## Patentansprüche

1. Ein Verfahren (30) zur Steuerung des Zugriffs eines Benutzers auf ein elektronisches Gerät (15, 16, 17, 18), wobei das elektronische Gerät (15, 16, 17, 18) von einem Administrator gesteuert wird, der eine oder mehrere Softwareanwendungen auf dem elektronischen Gerät (15, 16, 17, 18) identifiziert hat, auf die der Zugriff des Benutzers beschränkt werden soll, und eine zulässige Zeitspanne für den Zugriff des Benutzers auf die eine oder die mehreren identifizierten Softwareanwendungen festgelegt hat, wobei das Verfahren Folgendes umfasst:
Überwachen der Nutzungszeit des Benutzers beim Zugriff auf die eine oder die mehreren identifizierten Softwareanwendungen (32);
Feststellen, wann die Nutzungszeit des Benutzers beim Zugriff auf die eine oder die mehreren identifizierten Softwareanwendungen die zulässige Zeitspanne für den Zugriff auf die eine oder die mehreren identifizierten Softwareanwendungen überschreitet (34);
Warnen des Benutzers, dass seine Nutzungszeit für den Zugriff auf die eine oder die mehreren identifizierten Softwareanwendungen die zulässige Nutzungszeit für diesen Benutzer für den Zugriff auf die eine oder die mehreren identifizierten Softwareanwendungen überschreitet, und Sperren des Zugriffs des Benutzers auf die eine oder die mehreren identifizierten Softwareanwendungen auf dem elektronischen Gerät (36) und
Ermöglichen für den Benutzer, eine Verlängerung des zulässigen Zeitraums für den Zugriff auf die eine oder die mehreren identifizierten Softwareanwendungen zu beantragen (38);
Bereitstellen einer vom Administrator gemäß seinen Bildungsanforderungen ausgewählten Aufgabe für den Benutzer, die dieser als Antwort auf die Anfrage nach einer Verlängerung des zulässigen Zeitraums ausführen soll (40);
Bewerten der Leistung des Benutzers bei dieser Aufgabe (42) und
Verlängern des zulässigen Zeitraums für den Zugriff auf die eine oder die mehreren identifizierten Softwareanwendungen nach erfolgreichem Abschluss dieser Aufgabe.

2. Ein Verfahren (30) gemäß Anspruch 1, wobei der zulässige Zeitraum für den Zugriff eines Benutzers auf die identifizierten Anwendungen von einem Administrator festgelegt wird, der den Benutzer für jede identifizierte Anwendung überwacht.

3. Ein Verfahren (30) gemäß Anspruch 2, wobei der zulässige Zeitraum in diskreten Zeitintervallen festgelegt wird, die vom Benutzer oder Administrator vorab festgelegt oder eingestellt werden.

4. Ein Verfahren (30) gemäß Anspruch 1, wobei die Nutzungsdauer des Benutzers, der auf die eine oder die mehreren identifizierten Softwareanwendungen zugreift, durch eine Uhr überwacht wird, die die kumulierte Zugriffszeit des Benutzers auf die eine oder die mehreren identifizierten Softwareanwendungen aufzeichnet.

5. Ein Verfahren (30) gemäß Anspruch 4, wobei die aufgezeichnete kumulierte Zugriffszeit des Benutzers mit der zulässigen Zugriffsdauer für die eine oder die mehreren identifizierten Softwareanwendungen verglichen wird.

6. Ein Verfahren (30) gemäß Anspruch 1, wobei die Verlängerung der zulässigen Zugriffsdauer für den Benutzer auf die eine oder die mehreren identifizierten Softwareanwendungen vom Benutzer oder einem Administrator in seinem Namen vorgegeben wird.

7. Ein Verfahren (30) gemäß Anspruch 6, wobei die dem Benutzer als Antwort auf die Anfrage nach einer Verlängerung der zulässigen Zugriffsdauer zugewiesene Aufgabe ein vom Benutzer durchzuführendes Quiz oder einen durchzuführenden Test umfasst.

8. Ein Verfahren (30) gemäß Anspruch 1, wobei die Leistung des Benutzers bei der Aufgabe anhand seines Erfolgs bei der Erledigung der Aufgabe mit einem vorgegebenen Genauigkeitsgrad bewertet wird.

9. Ein Verfahren (30) gemäß Anspruch 8, wobei der vorgegebene Genauigkeitsgrad von einem Administrator oder dem Benutzer festgelegt wird.

## Revendications

1. Un procédé (30) permettant de contrôler l'accès d'un utilisateur à un dispositif électronique (15, 16, 17, 18), le dispositif électronique (15, 16, 17, 18) étant contrôlé par un administrateur ayant identifié une ou plusieurs applications logicielles sur le dispositif électronique (15, 16, 17, 18) auxquelles l'accès de l'utilisateur doit être limité et une durée d'utilisation autorisée pendant laquelle l'utilisateur peut accéder à l'application ou aux applications logicielles identifiées, le procédé consistant à :
surveiller le temps d'utilisation de l'utilisateur qui accède à l'application ou aux applications logicielles identifiées (32) ;
déterminer si le temps d'utilisation de l'utilisateur qui accède à l'application ou aux applications logicielles identifiées dépasse la durée d'utilisation autorisée pendant laquelle il peut accéder à l'application ou aux applications logicielles identifiées (34) ;
avertir l'utilisateur que son temps d'utilisation est sur le point de dépasser la durée d'utilisation autorisée pendant laquelle il peut accéder à l'application ou aux applications logicielles identifiées et suspendre l'accès de l'utilisateur à l'application ou aux applications logicielles identifiées sur le dispositif électronique (36) ; et à
permettre à l'utilisateur de demander une prolongation de la durée d'utilisation autorisée pendant laquelle il peut accéder à l'application ou aux applications logicielles identifiées (38) ;
assigner à l'utilisateur une tâche sélectionnée par l'administrateur en fonction des exigences en matière de formation de l'utilisateur, que l'utilisateur doit effectuer en réponse à la demande de prolongation de la durée d'utilisation autorisée (40) ;
évaluer les performances de l'utilisateur vis-à-vis de ladite tâche (42) ; et à
en cas de réussite de ladite tâche, prolonger la durée d'utilisation autorisée pendant laquelle l'utilisateur peut accéder à l'application ou aux applications logicielles identifiées.

2. Le procédé (30) de la revendication 1, dans lequel la durée d'utilisation autorisée pendant laquelle un utilisateur peut accéder aux applications identifiées est définie par un administrateur supervisant l'utilisateur pour chaque application identifiée.

3. Le procédé (30) de la revendication 2, dans lequel la durée d'utilisation autorisée est définie par intervalles de temps distincts prédéterminés ou fixés par l'utilisateur ou l'administrateur.

4. Le procédé (30) de la revendication 1, dans lequel le temps d'utilisation de l'utilisateur qui accède à l'application ou aux applications logicielles identifiées est surveillé par une horloge qui enregistre le temps d'accès cumulé de l'utilisateur à l'application ou aux applications logicielles identifiées.

5. Le procédé (30) de la revendication 4, dans lequel le temps d'accès cumulé enregistré de l'utilisateur est comparé à la durée d'utilisation autorisée pendant laquelle il peut accéder à l'application ou aux applications logicielles identifiées.

6. Le procédé (30) de la revendication 1, dans lequel la prolongation de la durée d'utilisation autorisée pendant laquelle l'utilisateur peut accéder à l'application ou aux applications logicielles identifiées est prédéterminée par l'utilisateur ou par un administrateur pour le compte de l'utilisateur.

7. Le procédé (30) de la revendication 6, dans lequel la tâche assignée à l'utilisateur en réponse à la demande de prolongation de la durée d'utilisation autorisée comprend un questionnaire ou un test que l'utilisateur doit effectuer.

8. Le procédé (30) de la revendication 1, dans lequel les performances de l'utilisateur vis-à-vis de la tâche sont évaluées en fonction du niveau de réussite avec lequel l'utilisateur accomplit la tâche à un niveau de précision prédéterminé.

9. Le procédé (30) de la revendication 8, dans lequel le niveau de précision prédéterminé est défini par un administrateur ou par l'utilisateur.
